(19) **Europäisches Patentamt / European Patent Office / Office européen des brevets**

(11) **EP 3 531 641 B1**

(12) **FASCICULE DE BREVET EUROPEEN**

(45) Date de publication et mention
de la délivrance du brevet:
**28.10.2020 Bulletin 2020/44**

(51) Int Cl.:
**H04L 12/931** (2013.01)   **H04L 12/751** (2013.01)
**H04L 12/753** (2013.01)

(21) Numéro de dépôt: **19155891.5**

(22) Date de dépôt: **07.02.2019**

(54) **PROCÉDÉ D ÉTABLISSEMENT DE ROUTES DE COMMUNICATION ENTRE NOEUDS D'UNE GRAPPE D' ORDINATEURS, PROGRAMME D'ORDINATEUR ET GRAPPE D'ORDINATEURS CORRESPONDANTS**

VERFAHREN ZUR ERZEUGUNG VON KOMMUNIKATIONSWEGEN ZWISCHEN DEN KNOTEN EINES COMPUTER-CLUSTERS, ENTSPRECHENDES COMPUTERPROGRAMM UND ENTSPRECHENDER COMPUTER-CLUSTER

METHOD FOR ESTABLISHING COMMUNICATION ROUTES BETWEEN NODES OF A CLUSTER OF COMPUTERS, CORRESPONDING COMPUTER PROGRAM AND CLUSTER OF COMPUTERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.02.2018 FR 1851558**

(43) Date de publication de la demande:
**28.08.2019 Bulletin 2019/35**

(73) Titulaire: **BULL SAS**
**78340 Les Clayes Sous Bois (FR)**

(72) Inventeurs:
• **QUINTIN, Jean-Noël**
**78340 Les Claye-sous-Bois (FR)**
• **GLIKSBERG, John**
**78340 Les Claye-sous-Bois (FR)**

(74) Mandataire: **Bonnet, Michel**
**Cabinet Bonnet**
**93, rue Réaumur**
**75002 Paris (FR)**

(56) Documents cités:
**EP-A1- 2 549 699     WO-A1-2014/036310**
**FR-A1- 3 037 463     US-A1- 2017 063 636**

• **ZAHAVI E: "D-Mod-K Routing Providing Non-Blocking Traffic for Shift Permutations on Real Life Fat Trees", INTERNET CITATION, 1 septembre 2010 (2010-09-01), pages 1-7, XP002686713, Extrait de l'Internet: URL:http://webee.technion.ac.il/publicatio n-link/index/id/574 [extrait le 2012-11-06]**
• **GLIKSBERG JOHN ET AL: "Node-Type-Based Load-Balancing Routing for Parallel Generalized Fat-Trees", 2018 IEEE 4TH INTERNATIONAL WORKSHOP ON HIGH-PERFORMANCE INTERCONNECTION NETWORKS IN THE EXASCALE AND BIG-DATA ERA (HIPINEB), IEEE, 24 février 2018 (2018-02-24), pages 9-15, XP033342107, DOI: 10.1109/HIPINEB.2018.00010**

**Description**

La présente invention concerne un procédé d'établissement de routes de communication entre nœuds d'une grappe d'ordinateurs, un programme d'ordinateur correspondant et une grappe d'ordinateurs.

L'invention s'applique plus particulièrement à un procédé d'établissement de routes de communication entre nœuds d'une grappe d'ordinateurs du type comportant :

- des nœuds,
- un réseau d'interconnexion des nœuds comportant :

  • des commutateurs à une partie desquels les nœuds sont connectés,
  • des liens de communication entre les commutateurs,

la grappe d'ordinateurs présentant une certaine topologie définissant l'agencement relatif des nœuds, des commutateurs et des liens de communication,
le procédé comportant :

- l'obtention de la topologie de la grappe d'ordinateurs, avec des premiers numéros globaux respectivement assignés aux nœuds,
- la mise en œuvre, pour chaque paire de nœuds, d'un algorithme conçu pour fournir une route de communication entre les premier et deuxième nœuds de la paire, à partir de numéros respectifs de ces nœuds et de la topologie de la grappe d'ordinateurs, l'algorithme étant conçu pour faire passer par un même lien de communication des routes dont les premiers ou deuxièmes nœuds ont des numéros périodiques suivant une périodicité supérieure à un.

Le brevet français publié sous le numéro FR3037463 divulgue un tel procédé d'établissement de routes de communication entre nœuds d'une grappe d'ordinateurs.

Il peut être souhaité de prévoir un procédé du type précité qui permette d'augmenter les performances de la grappe d'ordinateurs.

L'invention a donc pour objet un procédé d'établissement de routes de communication entre nœuds d'une grappe d'ordinateurs du type précité, caractérisé en ce qu'il comporte en outre :

- la sélection de nœuds,
- la numérotation des nœuds pour leur assigner des deuxièmes numéros globaux, différents des premiers numéros globaux pour au moins une partie des nœuds sélectionnés, les deuxièmes numéros globaux des nœuds sélectionnés étant successivement séparés de valeurs chacune différente de la périodicité de chacun d'au moins une partie des liens de communication,

et en ce que, pour la mise en œuvre de l'algorithme, les nœuds sont repérés par leurs deuxièmes numéros globaux.

Ainsi, grâce à l'invention, l'algorithme est mis en œuvre à partir de numéros des nœuds dans lesquels les numéros des nœuds sélectionnés ne présentent pas la périodicité d'au moins une partie des liens de communication. Cela permet de s'assurer que des routes rejoignant ces nœuds sélectionnés ne passent pas toutes par un de ces liens de communication. Ainsi, on s'assure que l'utilisation des liens de communication est bien équilibrée pour les nœuds sélectionnés. En sélectionnant des nœuds qui échangent une grande quantité de données, il est possible, grâce à cet équilibrage, de réduire les risques qu'un même lien de communication desserve beaucoup de nœuds sélectionnés et donc que ce lien de communication soit congestionné.

De façon optionnelle, les nœuds sélectionnés présentent une caractéristique commune, dont les autres nœuds sont dépourvus.

De façon optionnelle également, la caractéristique commune est que les nœuds sélectionnés sont des interfaces réseau optiques.

De façon optionnelle également, la caractéristique commune est que les nœuds sélectionnés appartiennent à des ordinateurs de stockage.

De façon optionnelle également, la caractéristique commune est que les nœuds sélectionnés appartiennent à des ordinateurs de calcul comportant un processeur graphique.

De façon optionnelle également, les deuxièmes numéros globaux des nœuds sélectionnés sont successifs.

De façon optionnelle également, le procédé comporte en outre :

- la détermination de la périodicité de chacun d'au moins une partie des liens de communication,
- la détermination de valeurs destinées à successivement séparer les deuxièmes numéros globaux des nœuds sélectionnés, chaque valeur déterminée étant différente de chaque périodicité déterminée.

De façon optionnelle également, les nœuds sont connectés à des ports de connexion d'une partie des commutateurs, ces ports de connexion présentant des numéros locaux au sein du commutateur auquel ces ports de connexion appartiennent, et dans lequel les premiers numéros globaux sont obtenus à partir des numéros locaux.

De façon optionnelle également, les premiers numéros globaux des nœuds connectés à des ports de connexion d'un commutateur se suivent consécutivement dans le même ordre que les numéros locaux des ports de connexion auxquels ces nœuds sont respectivement connectés.

De façon optionnelle également, le procédé comporte en outre l'étape suivante :

- l'exploration de la grappe d'ordinateurs pour déterminer sa topologie, les nœuds étant numérotés suivant la première numérotation globale au cours de cette exploration.

De façon optionnelle également, la grappe d'ordinateurs est conçue pour alterner des premières phases au cours desquelles les nœuds non sélectionnés échangent des données entre eux, et des deuxièmes phases au cours desquelles les nœuds non sélectionnés échangent des données avec les nœuds sélectionnés.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé d'établissement de routes de communication entre nœuds d'une grappe d'ordinateurs tel que défini précédemment, lorsque ledit programme est exécuté sur un ordinateur.

L'invention a également pour objet une grappe d'ordinateurs comportant :

- des nœuds,
- un réseau d'interconnexion des nœuds comportant :

  • des commutateurs à une partie desquels les nœuds sont connectés,
  • des liens de communication entre les commutateurs,

la grappe d'ordinateur présentant une certaine topologie définissant l'agencement relatif des nœuds, des commutateurs et des liens de communication,
la grappe d'ordinateur comportant :

- des moyens d'obtention de la topologie de la grappe d'ordinateurs, avec des premiers numéros globaux respectivement assignés aux nœuds,
- des moyens de mise en œuvre, pour chaque paire de nœuds, d'un algorithme conçu pour fournir une route de communication entre les premier et deuxième nœuds de la paire, à partir de numéros respectifs de ces nœuds et de la topologie de la grappe d'ordinateurs, l'algorithme étant conçu pour faire passer par un même lien de communication des routes dont les premiers ou deuxièmes nœuds ont des numéros périodiques suivant une périodicité supérieure à un,

caractérisé en ce qu'elle comporte en outre :

- des moyens de sélection de nœuds,
- des moyens de numérotation des nœuds pour leur assigner des deuxièmes numéros globaux, différents des premiers numéros globaux pour au moins une partie des nœuds sélectionnés, les deuxièmes numéros globaux des nœuds sélectionnés étant successivement séparés de valeurs différentes de la périodicité respective de chacun d'au moins une partie des liens de communication,

et en ce que, pour la mise en œuvre de l'algorithme, les nœuds sont repérés par leurs deuxièmes numéros globaux.

L'invention sera mieux comprise à l'aide de la description qui va suivre, donnée uniquement à titre d'exemple et faite en se référant aux dessins annexés dans lesquels :

- la figure 1 représente schématiquement la structure générale d'une grappe d'ordinateurs, selon un mode de réalisation de l'invention,
- la figure 2 illustre les étapes successives d'un procédé d'établissement de routes de communication entre nœuds de la grappe d'ordinateurs de la figure 1, selon un mode de réalisation de l'invention, et
- la figure 3 illustre les étapes successives d'un procédé d'établissement de routes de communication entre nœuds de la grappe d'ordinateurs de la figure 1, selon un autre mode de réalisation de l'invention.

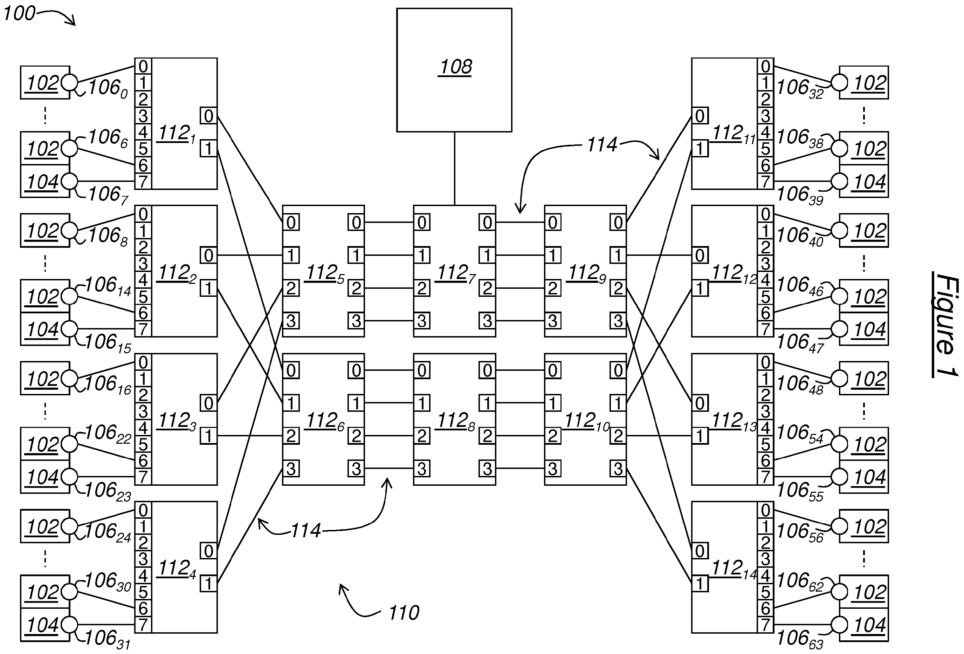

En référence à la figure 1, une grappe d'ordinateurs 100 (« computer cluster » en anglais) mettant en œuvre l'invention va à présent être décrite.

La grappe d'ordinateurs 100 regroupe des ordinateurs 102, 104 indépendants apparaissant de l'extérieur comme un calculateur unique à très forte puissance de calcul, dit calculateur à haute performance de traitement ou calculateur HPC (de l'anglais « High Performance Computing »). Chaque ordinateur 102, 104 comporte, comme cela est connu en soi, une unité de traitement centrale (« central processing unit » en anglais), une mémoire principale (« main memory » en anglais) dans laquelle des instructions pour l'unité de traitement centrale sont destinées à être enregistrées et au moins une interface réseau.

Les interfaces réseau forment respectivement des nœuds $106_0...106_{63}$ de la grappe d'ordinateurs 100. Plusieurs interfaces réseau (et donc plusieurs nœuds $106_0...106_{63}$) peuvent appartenir à un même ordinateur 102, 104, ou bien, comme dans l'exemple décrit, chaque ordinateur 102, 104 peut ne comporter qu'une seule interface réseau formant un des nœuds $106_0...106_{63}$.

Toujours dans l'exemple décrit, les ordinateurs 102, 104 de la grappe d'ordinateurs 100 comportent des ordinateurs de calcul 102 et des ordinateurs de stockage 104, ces derniers comportant des mémoires de masse telles que des disques durs pour l'enregistrement de données utilisées et/ou produites par les ordinateurs de calcul 102.

La grappe d'ordinateurs 100 comporte en outre un serveur d'administration 108. Le serveur d'administration 108 est en particulier conçu pour dialoguer avec des clients souhaitant utiliser la grappe d'ordinateurs 100, cette dernière étant alors vue par les clients comme une machine unique. Le serveur d'administration 108 est en outre conçu pour ordonnancer, entre les ordinateurs de calcul 102, des tâches reçues des clients. Le serveur d'administration 108 est en outre conçu pour mettre en œuvre un procédé d'établissement de routes de communication entre nœuds $106_0...106_{63}$ de la grappe d'ordinateurs, comme cela sera décrit par la suite. Pour cela, le serveur d'administration 108 comporte des moyens pour réaliser les étapes qui seront décrites par la suite. Dans l'exemple décrit, le serveur d'administration 108 comporte, comme cela est connu en soi, une unité de traitement centrale et une mémoire principale dans laquelle des instructions pour l'unité de traitement centrale sont destinées à être enregistrées. Ainsi, dans l'exemple décrit, les moyens sont des moyens logiciels, sous la forme de programme d'ordinateur téléchargeable depuis un réseau de communication et/ou enregistré sur un support lisible par ordinateur et/ou exécutable par un processeur, comprenant des instructions pour l'exécution des étapes du procédé lorsque ledit programme d'ordinateur est exécuté sur le serveur d'administration. Alternativement, tout ou partie de ces moyens pourraient être des moyens matériels micro programmés ou micro câblés dans des circuits intégrés dédiés. Ainsi, en variante, le serveur d'administration 108 pourrait être un dispositif électronique composé uniquement de circuits numériques (sans programme d'ordinateur) pour la réalisation des mêmes actions.

Dans d'autres modes de réalisation de l'invention, les différentes fonctions du serveur d'administration 108 pourraient être réparties entre plusieurs dispositifs, par exemple entre plusieurs ordinateurs.

Une telle grappe d'ordinateurs 100 permet la répartition de traitements complexes et/ou de calculs parallèles sur au moins une partie des ordinateurs de calcul 102.

Par la suite, on appellera « nœuds de calcul », respectivement « nœuds de stockage », les nœuds formés d'une interface réseau appartenant à un ordinateur de calcul 102, respectivement de stockage 104.

Dans l'exemple décrit, les interfaces réseau des ordinateurs de stockage 104 sont des interfaces réseau optiques, tandis que les interfaces réseau des ordinateurs de calcul 102 sont des interfaces réseau électriques présentant un débit inférieur à celui des interfaces réseau optiques. En effet, les ordinateurs de stockage 104 échangent en général plus de données que les ordinateurs de calcul 102.

La grappe d'ordinateurs 100 comporte en outre un réseau 110 d'interconnexion des nœuds $106_0...106_{63}$.

Le réseau 110 comporte des commutateurs $112_1...112_{14}$ et des liens de communication 114 entre les commutateurs $112_1...112_{14}$. Chaque commutateur $112_1...112_{14}$ présente plusieurs ports de connexion (représentés par des petits carrés sur la figure 1) et chaque lien de communication 114 est connecté entre deux ports de connexion de deux commutateurs $112_1...112_{14}$ respectifs.

Les nœuds $106_0...106_{63}$ sont respectivement connectés à des ports de connexion d'une partie des commutateurs $112_1...112_{14}$, appelés par la suite commutateurs externes $112_1...112_4$, $112_{11}...112_{14}$. Les autres commutateurs $112_5...112_{10}$ seront appelés par la suite commutateurs internes.

La grappe d'ordinateurs 100 présente une certaine topologie définissant l'agencement relatif des nœuds $106_0...106_{63}$, des commutateurs $112_1...112_{14}$ et des liens de communication 114. Dans l'exemple décrit, la topologie est celle d'un arbre imposant parallèle généralisé (« Parallel Generalized Fat Tree » ou PGFT en anglais). La topologie d'un PGFT est définie de manière générale par la nomenclature suivante : PGFT($h$ ; $m_1...m_h$ ; $w_1...w_h$ ; $p_1...p_h$), où $h$ est le nombre de niveaux entre lesquels les commutateurs $112_1...112_{14}$ sont répartis, $m_n$ est le nombre de commutateurs de niveau $n-1$ (ou bien de nœuds pour le premier niveau) connectés à chaque commutateur de niveau $n$, $w_n$ est le nombre de commutateurs de niveau $n$ connectés à chaque commutateur de niveau $n-1$ (ou bien à chaque nœud pour le premier niveau) et $p_n$ est le nombre de liens de communication parallèles utilisés entre les niveaux $n$ et $n-1$ (ou bien entre le niveau $n$ et les nœuds pour le premier niveau).

Les commutateurs externes $112_1...112_4$, $112_{11}...112_{14}$, auxquels des nœuds $106_0...106_{63}$ sont connectés,

forment donc les commutateurs de premier niveau. Par ailleurs, dans la topologie PGFT, chaque lien de communication 114 est connecté entre deux commutateurs de niveaux hiérarchiques consécutifs.

Pour chaque commutateur $112_1...112_{14}$, les ports de connexion donnant sur un niveau inférieur (ou bien sur les nœuds $106_0...106_{63}$ dans le cas des commutateurs externes $112_1...112_4$, $112_{11}...112_{14}$) seront appelés par la suite « ports de connexion inférieurs », tandis que les ports de connexion donnant sur un niveau supérieur seront appelés par la suite « ports de connexion supérieurs ».

Dans l'exemple décrit, le PGFT est défini par la nomenclature PGFT(3 ; 8, 4, 2 ; 1, 2, 1 ; 1, 1, 4). Ainsi, huit nœuds sont connectés à chaque commutateur externe $112_1...112_4$, $112_{11}...112_{14}$, ce dernier comportant donc huit ports de connexion inférieurs.

Les ports de connexion inférieurs et les ports de connexion supérieurs de chaque commutateur $112_1...112_{14}$ sont numérotés, au sein de ce commutateur $112_1...112_{14}$, suivant une numérotation locale. Les numéros locaux des ports de connexion inférieurs et les numéros locaux des ports de connexion supérieurs sont indiqués sur la figure 1 dans les petits carrés. En particulier, les ports de connexion inférieurs de chaque commutateur externe $112_1...112_4$, $112_{11}...112_{14}$ sont numérotés à chaque fois suivant une numérotation locale leur assignant respectivement, dans l'exemple décrit, les numéros locaux de 0 à 7.

Toujours dans l'exemple décrit, les commutateurs externes $112_1...112_4$, $112_{11}...112_{14}$ sont tous identiques, au moins en ce qui concerne leurs ports de connexion inférieurs. En outre, dans l'exemple décrit, les ports de connexion inférieurs des commutateurs externes $112_1...112_4$, $112_{11}...112_{14}$ portant le numéro local 7 sont des ports optiques auxquels les interfaces réseau optiques (formant les nœuds de stockage $106_7$, $106_{15}$, $106_{23}$, $106_{31}$, $106_{39}$, $106_{47}$, $106_{55}$, $106_{63}$) des ordinateurs de stockage 104 sont connectées. Les autres ports de connexion inférieurs des commutateurs externe $112_1...112_4$, $112_{11}...112_{14}$ sont des ports de connexion électriques auxquels les nœuds de calcul sont connectés. Les ports de connexion (inférieurs et supérieurs) des commutateurs internes $112_5...112_{10}$ sont également des ports de connexion électriques dans l'exemple décrit.

Le serveur d'administration 108 est conçu pour mettre en œuvre un algorithme d'établissement de routes de communication entre nœuds. Plus précisément, cet algorithme est conçu pour fournir une route de communication entre un premier nœud $106_0...106_{63}$ et un deuxième nœud $106_0...106_{63}$ à partir de numéros respectifs de ces nœuds $106_0...106_{63}$ et de la topologie de la grappe d'ordinateurs 100.

Dans l'exemple décrit, l'algorithme utilisé est l'algorithme D-mod-k, qui attend un numéro, noté s, d'un premier nœud, appelé nœud source, et un numéro, noté d, d'un deuxième nœud, appelé nœud destination, pour définir une route de communication entre ces deux nœuds.

En partant du nœud source, la route de communication passe tout d'abord par le commutateur externe $112_1...112_4$, $112_{11}...112_{14}$ auquel le nœud source est connecté.

Il est ensuite déterminé, au cours d'une étape de test, s'il est nécessaire de passer par un commutateur de niveau supérieur pour atteindre le nœud destination.

Si c'est le cas, la formule suivante est utilisée pour sélectionner un port de connexion supérieur (et donc le commutateur de niveau supérieur par lequel passer) :

$$[d / (w_0 * p_0) / (w_1 * p_1) / ... / (w_{x-1} * p_{x-1})] \bmod (w_x * p_x)$$

où [] représente la partie entière et mod représente le modulo.

Sinon, le commutateur de niveau inférieur sur le plus court chemin vers le nœud destination est sélectionné, puis la formule suivante est utilisée pour sélectionner, dans le cas où plusieurs liens parallèles mènent au commutateur de niveau inférieur sélectionné, un port de connexion inférieur :

$$[ d / ( w_0 * ... * w_{x-1} ) ] \bmod (p_{x-1})$$

où [] représente la partie entière et mod représente le modulo.

L'algorithme retourne alors à l'étape de test.

Par exemple, dans l'exemple décrit, lorsqu'il est nécessaire de passer d'un commutateur de premier niveau $112_1...112_4$, $112_{11}...112_{14}$ à un commutateur de deuxième niveau $112_5$, $112_6$, $112_9$, $112_{10}$, l'algorithme D-mod-k donne la formule [d] mod 2, qui est périodique de période deux. Pour passer d'un commutateur de deuxième niveau $112_5$, $112_6$, $112_9$, $112_{10}$ à un commutateur de troisième niveau $112_7$, $112_8$, l'algorithme D-mod-k donne la formule [d/2] mod 4, qui est périodique de période huit.

L'algorithme est ainsi conçu pour faire passer par un même lien de communication des routes dont les nœuds destination ont des numéros périodiques suivant une périodicité supérieure (dans le sens « strictement supérieure ») à un.

En variante, l'algorithme S-mod-k pourrait être utilisé. Dans ce cas, des formules similaires à celles de l'algorithme D-mod-k sont utilisées, en remplaçant le numéro s par le numéro d. L'algorithme S-mod-k est donc également conçu pour faire passer par un même lien de communication des routes dont les nœuds source ont des numéros périodiques suivant une périodicité supérieure (toujours dans le sens « strictement supérieure ») à un.

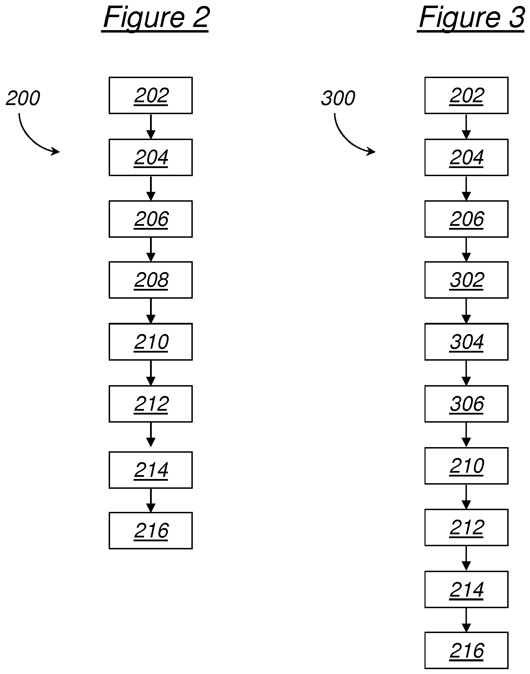

En référence à la figure 2, un premier procédé 200 d'établissement et d'utilisation de routes de communication entre nœuds $106_0...106_{63}$ de la grappe d'ordinateurs 100 va à présent être décrit.

Au cours d'une étape 202, le serveur d'administration 108 met en œuvre une exploration (« discovery » en anglais) de la grappe d'ordinateurs 100. L'exploration permet de déterminer la topologie de la grappe d'ordinateurs 100. En outre, au cours de l'exploration, les nœuds $106_0...106_{63}$ trouvés sont numérotés suivant une première numérotation globale assignant aux nœuds $106_0...106_{63}$ des premiers numéros globaux respectifs. Dans l'exemple décrit, les premiers numéros globaux sont obtenus à partir des numéros locaux. Plus précisément, à chaque fois qu'un commutateur externe $112_1...112_4$, $112_{11}...112_{14}$ est découvert, les nœuds qui lui sont connectés sont numérotés consécutivement, à la suite, le cas échéant, des premiers numéros globaux déjà assignés, dans l'ordre de la numérotation locale des ports de connexion inférieurs auxquels ces nœuds sont connectés.

Par exemple, si le commutateur externe $112_1$ est découvert en premier, les premiers numéros globaux 0 - 7 seront respectivement assignés aux nœuds $106_0...107_7$. Si le commutateur externe $112_2$ est ensuite découvert, les premiers numéros globaux 8 - 15 seront respectivement assignés aux nœuds $106_8...106_{15}$, et ainsi de suite. Il sera donc apprécié que, dans le cadre de la topologie de l'exemple décrit, les premiers numéros globaux des nœuds de stockage $106_7$, $106_{15}$, $106_{23}$, $106_{31}$, $106_{39}$, $106_{47}$, $106_{55}$, $106_{63}$ sont périodiques de périodicité huit.

Or, comme indiqué précédemment, la formule [d/2] mod 4 de sélection de ports de connexion supérieurs pour passer du deuxième niveau au troisième niveau est également périodique de périodicité huit. Ainsi, si l'algorithme était utilisé à partir des premiers numéros globaux, toutes les routes partant de n'importe lequel des nœuds dont les premiers numéros globaux sont 0 - 31 et arrivant aux nœuds de stockage $106_7$, $106_{15}$, $106_{23}$, $106_{31}$, $106_{39}$, $106_{47}$, $106_{55}$, $106_{63}$ passeraient par un même lien de communication 114 s'étendant entre les deuxième et troisième niveaux. Ainsi, ce lien de communication 114 devrait supporter toutes les routes vers quatre nœuds de stockage $106_{39}$, $106_{47}$, $106_{55}$, $106_{63}$. Or, les nœuds de stockage $106_7$, $106_{15}$, $106_{23}$, $106_{31}$, $106_{39}$, $106_{47}$, $106_{55}$, $106_{63}$ sont en général plus sollicités que les nœuds de calcul, de sorte que ce lien de communication 114 risquerait d'être très congestionné. En outre, le fonctionnement de la grappe d'ordinateurs 100 pour réaliser une tâche alterne généralement des phases de calculs au cours desquelles les nœuds de calculs échangent des données entre eux, et des phases de sauvegarde et/ou de récupération de données au cours desquelles les nœuds de calculs échangent des données avec les nœuds de stockage pour enregistrer et/ou lire des données dans les nœuds de stockage. Ainsi, lors des phases des phases de sauvegarde et/ou de récupération de données, chaque lien de communication 114 emprunté par plusieurs routes reliant chacune un nœud de calcul à un nœud de stockage serait fortement sollicité et risquerait d'être très congestionné.

Suite à l'étape d'exploration 202, le serveur d'administration 108 obtient donc, au cours d'une étape 204, la topologie de la grappe d'ordinateurs 100, avec les premiers numéros globaux respectivement assignés aux nœuds $106_0...106_{63}$.

Au cours d'une étape 206, le serveur d'administration 108 sélectionne des nœuds. Dans l'exemple décrit, les nœuds de stockage $106_7$, $106_{15}$, $106_{23}$, $106_{31}$, $106_{39}$, $106_{47}$, $106_{55}$, $106_{63}$ sont sélectionnés. Les nœuds à sélectionner sont par exemple indiqués au serveur d'administration 108 par un utilisateur humain au travers d'une interface homme-machine. Alternativement, le serveur d'administration 108 pourrait être conçu pour déterminer automatiquement lesquels parmi les nœuds $106_0...106_{63}$ sont connectés à des ports de connexion optiques.

De manière générale, les nœuds sélectionnés sont de préférence ceux présentant tous une caractéristique commune (qui peut être par exemple détectée automatiquement), tandis que les autres nœuds sont dépourvus de cette caractéristique. Dans l'exemple décrit, cette caractéristique est que l'interface réseau formant le nœud sélectionné est une interface réseau optique. Alternativement, d'autres caractéristiques pourraient être prises en compte. Par exemple, la caractéristique commune pourrait être que le nœud appartient à un ordinateur de stockage. Par exemple encore, la caractéristique commune pourrait être la présence d'un processeur graphique (« Graphics Processing Unit » en anglais) dans l'ordinateur de calcul.

Au cours d'une étape 208, le serveur d'administration 108 numérote les nœuds $106_0...106_{63}$ suivant une deuxième numérotation globale, différente de la première numérotation globale au moins pour une partie des nœuds sélectionnés $106_7$, $106_{15}$, $106_{23}$, $106_{31}$, $106_{39}$, $106_{47}$, $106_{55}$, $106_{63}$. Dans cette deuxième numérotation, des deuxièmes numéros globaux sont respectivement assignés aux nœuds $106_0...106_{63}$, de sorte que les deuxièmes numéros globaux des nœuds sélectionnés $106_7$, $106_{15}$, $106_{23}$, $106_{31}$, $106_{39}$, $106_{47}$ soient successivement séparés de valeurs chacune différente de la périodicité de chacun d'au moins une partie des liens de communication 114, de préférence de tous les liens de communication 114.

Dans l'exemple décrit, les deuxièmes numéros globaux des nœuds sélectionnés $106_7$, $106_{15}$, $106_{23}$, $106_{31}$, $106_{39}$, $106_{47}$ sont choisis consécutifs, de sorte que les valeurs les séparant sont toutes égales à un et de ce fait obligatoirement différentes des périodicités de tous les liens de communication 114.

Par exemple, l'algorithme suivant (comportant des étapes A à F) peut être utilisé pour passer de la première numérotation globale à la deuxième numérotation globale.

A : Un compteur est initialisé à zéro.

B : Un type de nœud qui n'a pas encore été sélectionné est sélectionné. Si tous les types de nœud ont été sélectionnés, l'algorithme est terminé.

C : Le premier nœud du type sélectionné d'après l'ordre de la première numérotation est pris comme nœud en cours.

D : La valeur du compteur est assignée au nœud en cours en tant que deuxième numéro global.

E : Le compteur est incrémenté.

F : Le nœud du type sélectionné qui suit d'après l'ordre de la première numérotation est pris comme nœud en cours et on retourne à l'étape D. Si tous les nœuds du type sélectionné ont été parcourus, on retourne à l'étape B.

Cet algorithme est utilisé avec au moins deux types de nœuds : un premier type de nœud formé par les nœuds sélectionnés et un deuxième type de nœud formé des nœuds non sélectionnés.

Ainsi, dans l'exemple décrit, dans la deuxième numérotation globale, les nœuds de calcul sont numérotés de 0 à 55 et les nœuds de stockage sont numérotés de 56 à 63.

Au cours d'une étape 210, le serveur d'administration 108 met en œuvre l'algorithme en l'exécutant pour chaque paire de nœuds, les nœuds étant repérés par leurs deuxièmes numéros globaux.

Au cours d'une étape 212, le serveur d'administration 108 implémente dans le réseau 110 les routes fournies par l'algorithme à l'étape 210. Dans l'exemple décrit, les routes sont enregistrées dans des tables de routage transmises à chaque commutateur $112_1...112_{14}$.

Au cours d'une étape 214, le serveur d'administration 108 reçoit, de la part d'un client, une requête pour l'exécution d'une tâche.

Au cours d'une étape 216, au moins une partie des ordinateurs 102, 104 exécutent la tâche requise en communiquant entre eux au travers du réseau 110 utilisant les routes de communication établies à l'étape 210.

En référence à la figure 3, un deuxième procédé 300 d'établissement et d'utilisation de routes de communication entre nœuds $106_0...106_{63}$ de la grappe d'ordinateurs 100 va à présent être décrit.

Le deuxième procédé 300 comporte les étapes 202, 204, 206 comme pour le premier procédé 200.

Après l'étape 206, le deuxième procédé 300 comporte les étapes 302 à 306 suivantes.

Au cours de l'étape 302, le serveur d'administration 108 détermine la périodicité de chacun d'au moins une partie des liens de communication 114, de préférence tous. Par exemple, cette périodicité est déterminée à partir des formules de l'algorithme utilisé.

Au cours de l'étape 304, le serveur d'administration 108 détermine des valeurs destinées à successivement séparer les deuxièmes numéros globaux des nœuds sélectionnés $106_7$, $106_{15}$, $106_{23}$, $106_{31}$, $106_{39}$, $106_{47}$, $106_{55}$, $106_{63}$, chaque valeur déterminée étant différente de chaque périodicité déterminée.

Par exemple, dans l'exemple décrit, les liens de communication 114 s'étendant entre le premier et le deuxième niveau ont une périodicité de deux, tandis que les liens de communication 114 s'étendant entre le deuxième niveau et le troisième niveau ont une périodicité de huit. Ainsi, les valeurs destinées à successivement séparer les deuxièmes numéros globaux des nœuds sélectionnés $106_7$, $106_{15}$, $106_{23}$, $106_{31}$, $106_{39}$, $106_{47}$, $106_{55}$, $106_{63}$ sont chacune différentes de deux et de huit. Par exemple, il est possible de prendre des valeurs valant toutes un, comme dans le procédé 200, ou bien des valeurs différentes les unes des autres, tant qu'elles sont différentes de deux et huit.

Au cours de l'étape 306, le serveur d'administration 108 numérote les nœuds $106_0...106_{63}$ suivant une deuxième numérotation globale, différente de la première numérotation globale au moins pour une partie des nœuds sélectionnés. Dans cette deuxième numérotation, les deuxièmes numéros globaux des nœuds sélectionnés $106_7$, $106_{15}$, $106_{23}$, $106_{31}$, $106_{39}$, $106_{47}$ sont successivement séparés des valeurs déterminées à l'étape 304.

Le deuxième procédé 300 comporte ensuite les étapes 210 à 216 décrites précédemment.

Il apparaît clairement qu'un procédé tel que ceux décrits précédemment permet de s'assurer que l'utilisation des liens de communication est bien équilibrée pour les nœuds sélectionnés.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

**Revendications**

1. Procédé (200 ; 300) d'établissement de routes de communication entre nœuds ($106_0...106_{63}$) d'une grappe d'ordinateurs (100) comportant :

- des nœuds ($106_0$...$106_{63}$),
- un réseau (110) d'interconnexion des nœuds ($106_0$...$106_{63}$) comportant :

  • des commutateurs ($112_1$...$112_{14}$) à une partie desquels les nœuds ($106_0$...$106_{63}$) sont connectés,
  • des liens de communication (114) entre les commutateurs ($112_1$...$112_{14}$),

la grappe d'ordinateurs (100) présentant une certaine topologie définissant l'agencement relatif des nœuds ($106_0$...$106_{63}$), des commutateurs ($112_1$...$112_{14}$) et des liens de communication (114),
le procédé (200 ; 300) comportant :

  - l'obtention (204) de la topologie de la grappe d'ordinateurs (100), avec des premiers numéros globaux respectivement assignés aux nœuds ($106_0$...$106_{63}$),
  - la mise en œuvre (210), pour chaque paire de nœuds ($106_0$...$106_{63}$), d'un algorithme conçu pour fournir une route de communication entre les premier et deuxième nœuds de la paire, à partir de numéros respectifs de ces nœuds et de la topologie de la grappe d'ordinateurs (100), l'algorithme étant conçu pour faire passer par un même lien de communication (114) des routes dont les premiers ou deuxièmes nœuds ont des numéros périodiques suivant une périodicité supérieure à un,

  **caractérisé en ce qu'**il comporte en outre :

  - la sélection (206) de nœuds ($106_7$, $106_{15}$, $106_{23}$, $106_{31}$, $106_{39}$, $106_{47}$, $106_{55}$, $106_{63}$),
  - la numérotation (208) des nœuds ($106_0$...$106_{63}$) pour leur assigner des deuxièmes numéros globaux, différents des premiers numéros globaux pour au moins une partie des nœuds sélectionnés ($106_7$, $106_{15}$, $106_{23}$, $106_{31}$, $106_{39}$, $106_{47}$, $106_{55}$, $106_{63}$), les deuxièmes numéros globaux des nœuds sélectionnés ($106_7$, $106_{15}$, $106_{23}$, $106_{31}$, $106_{39}$, $106_{47}$, $106_{55}$, $106_{63}$) étant successivement séparés de valeurs chacune différente de la périodicité de chacun d'au moins une partie des liens de communication (114),

  et **en ce que**, pour la mise en œuvre de l'algorithme, les nœuds ($106_0$...$106_{63}$) sont repérés par leurs deuxièmes numéros globaux.

2. Procédé (200 ; 300) selon la revendication 1, dans lequel les nœuds sélectionnés ($106_7$, $106_{15}$, $106_{23}$, $106_{31}$, $106_{39}$, $106_{47}$, $106_{55}$, $106_{63}$) présentent une caractéristique commune, dont les autres nœuds sont dépourvus.

3. Procédé (200 ; 300) selon la revendication 2, dans lequel la caractéristique commune est que les nœuds sélectionnés ($106_7$, $106_{15}$, $106_{23}$, $106_{31}$, $106_{39}$, $106_{47}$, $106_{55}$, $106_{63}$) sont des interfaces réseau optiques.

4. Procédé (200 ; 300) selon la revendication 2 ou 3, dans lequel la caractéristique commune est que les nœuds sélectionnés ($106_7$, $106_{15}$, $106_{23}$, $106_{31}$, $106_{39}$, $106_{47}$, $106_{55}$, $106_{63}$) appartiennent à des ordinateurs de stockage (104).

5. Procédé (200 ; 300) selon la revendication 2, dans lequel la caractéristique commune est que les nœuds sélectionnés ($106_7$, $106_{15}$, $106_{23}$, $106_{31}$, $106_{39}$, $106_{47}$, $106_{55}$, $106_{63}$) appartiennent à des ordinateurs de calcul (102) comportant un processeur graphique.

6. Procédé (200) selon l'une quelconque des revendications 1 à 5, dans lequel les deuxièmes numéros globaux des nœuds sélectionnés ($106_7$, $106_{15}$, $106_{23}$, $106_{31}$, $106_{39}$, $106_{47}$, $106_{55}$, $106_{63}$) sont successifs.

7. Procédé (300) selon l'une quelconque des revendications 1 à 6, comportant en outre :

  - la détermination (302) de la périodicité de chacun d'au moins une partie des liens de communication (114),
  - la détermination (304) de valeurs destinées à successivement séparer les deuxièmes numéros globaux des nœuds sélectionnés ($106_7$, $106_{15}$, $106_{23}$, $106_{31}$, $106_{39}$, $106_{47}$, $106_{55}$, $106_{63}$), chaque valeur déterminée étant différente de chaque périodicité déterminée.

8. Procédé (200 ; 300) selon l'une quelconque des revendications 1 à 7, dans lequel les nœuds ($106_0$...$106_{63}$) sont connectés à des ports de connexion d'une partie des commutateurs, ces ports de connexion présentant des numéros locaux au sein du commutateur auquel ces ports de connexion appartiennent, et dans lequel les premiers numéros globaux sont obtenus à partir des numéros locaux.

**9.** Procédé (200 ; 300) selon la revendication 8, dans lequel les premiers numéros globaux des nœuds ($106_0$...$106_{63}$) connectés à des ports de connexion d'un commutateur se suivent consécutivement dans le même ordre que les numéros locaux des ports de connexion auxquels ces nœuds ($106_0$...$106_{63}$) sont respectivement connectés.

**10.** Procédé (200 ; 300) selon l'une quelconque des revendications 1 à 9, comportant en outre l'étape suivante :

- l'exploration (202) de la grappe d'ordinateurs (100) pour déterminer sa topologie, les nœuds ($106_0$...$106_{63}$) étant numérotés suivant la première numérotation globale au cours de cette exploration.

**11.** Procédé (200 ; 300) selon l'une quelconque des revendications 1 à 10, dans lequel la grappe d'ordinateurs (100) est conçue pour alterner des premières phases au cours desquelles les nœuds non sélectionnés échangent des données entre eux, et des deuxièmes phases au cours desquelles les nœuds non sélectionnés échangent des données avec les nœuds sélectionnés.

**12.** Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé (200 ; 300) d'établissement de routes de communication entre nœuds ($106_0$...$106_{63}$) d'une grappe d'ordinateurs (100) selon l'une quelconque des revendications 1 à 11, lorsque ledit programme est exécuté sur un ordinateur.

**13.** Grappe d'ordinateurs (100) comportant :

- des nœuds ($106_0$...$106_{63}$),
- un réseau (110) d'interconnexion des nœuds ($106_0$...$106_{63}$) comportant :

   • des commutateurs ($112_1$...$112_{14}$) à une partie desquels les nœuds ($106_0$...$106_{63}$) sont connectés,
   • des liens de communication (114) entre les commutateurs ($112_1$...$112_{14}$),

la grappe d'ordinateurs (100) présentant une certaine topologie définissant l'agencement relatif des nœuds ($106_0$...$106_{63}$), des commutateurs ($112_1$...$112_{14}$) et des liens de communication (114),
la grappe d'ordinateurs (100) comportant :

- des moyens d'obtention de la topologie de la grappe d'ordinateurs (100), avec des premiers numéros globaux respectivement assignés aux nœuds ($106_0$...$106_{63}$),
- des moyens de mise en œuvre, pour chaque paire de nœuds ($106_0$...$106_{63}$), d'un algorithme conçu pour fournir une route de communication entre les premier et deuxième nœuds de la paire, à partir de numéros respectifs de ces nœuds et de la topologie de la grappe d'ordinateurs (100), l'algorithme étant conçu pour faire passer par un même lien de communication (114) des routes dont les premiers ou deuxièmes nœuds ont des numéros périodiques suivant une périodicité supérieure à un,

**caractérisé en ce qu'**elle comporte en outre :

- des moyens de sélection de nœuds ($106_7$, $106_{15}$, $106_{23}$, $106_{31}$, $106_{39}$, $106_{47}$, $106_{55}$, $106_{63}$),
- des moyens de numérotation des nœuds ($106_0$...$106_{63}$) pour leur assigner des deuxièmes numéros globaux, différents des premiers numéros globaux pour au moins une partie des nœuds sélectionnés ($106_7$, $106_{15}$, $106_{23}$, $106_{31}$, $106_{39}$, $106_{47}$, $106_{55}$, $106_{63}$), les deuxièmes numéros globaux des nœuds sélectionnés ($106_7$, $106_{15}$, $106_{23}$, $106_{31}$, $106_{39}$, $106_{47}$, $106_{55}$, $106_{63}$) étant successivement séparés de valeurs chacune différente de la périodicité de chacun d'au moins une partie des liens de communication (114),

et **en ce que**, pour la mise en œuvre de l'algorithme, les nœuds ($106_0$...$106_{63}$) sont repérés par leurs deuxièmes numéros globaux.


**Patentansprüche**

**1.** Verfahren (200; 300) zum Erzeugen von Kommunikationswegen zwischen Knoten ($106_0$...$106_{63}$) eines Computer-Clusters (100), Folgendes beinhaltend:

- Knoten ($106_0$...$106_{63}$),
- ein Netzwerk (110) von Verbindungen der Knoten ($106_0$...$106_{63}$) untereinander, Folgendes beinhaltend:

  • Wechselschalter ($112_1$...$112_{14}$), mit einem Teil davon die Knoten ($106_0$...$106_{63}$) verbunden sind,
  • Kommunikations-Links (114) zwischen den Wechselschaltern ($112_1$...$112_{14}$),

wobei der Computer-Cluster (100) eine bestimmte Topologie aufweist, die die Anordnung der Knoten ($106_0$...$106_{63}$), der Wechselschalter ($112_1$...$112_{14}$) und der Kommunikations-Links (114) zueinander definiert,
wobei das Verfahren (200; 300) Folgendes beinhaltet:

- den Erhalt (204) der Topologie des Computer-Clusters (100) mit ersten jeweils den Knoten ($106_0$...$106_{63}$) zugeordneten globalen Nummern,
- die Umsetzung (210), für jedes Knotenpaar ($106_0$...$106_{63}$), eines Algorithmus, der gestaltet ist, um einen Kommunikationsweg zwischen dem ersten und zweiten Knoten des Paares aus jeweiligen Nummern dieser Knoten und der Topologie des Computer-Clusters (100) bereitzustellen, wobei der Algorithmus gestaltet ist, um durch einen selben Kommunikations-Link (114) Wege durchlaufen zu lassen, deren erste oder zweite Knoten periodische Nummern gemäß einer Periodizität größer als eins aufweisen,

**dadurch gekennzeichnet, dass** es weiter Folgendes beinhaltet:

- die Auswahl (206) von Knoten ($106_7$, $106_{15}$, $106_{23}$, $106_{31}$, $106_{39}$, $106_{47}$, $106_{55}$, $106_{63}$),
- die Nummerierung (208) der Knoten ($106_0$...$106_{63}$), um ihnen zweite globale Nummern, die sich von den ersten globalen Nummern für mindestens einen Teil der ausgewählten Knoten ($106_7$, $106_{15}$, $106_{23}$, $106_{31}$, $106_{39}$, $106_{47}$, $106_{55}$, $106_{63}$) unterscheiden, zuzuordnen, wobei die zweiten globalen Nummern der ausgewählten Knoten ($106_7$, $106_{15}$, $106_{23}$, $106_{31}$, $106_{39}$, $106_{47}$, $106_{55}$, $106_{63}$) nacheinander von Werten getrennt sind, wobei sich jeder von der Periodizität von jedem von mindestens einem Teil der Kommunikations-Links (114) unterscheidet,
und dadurch, dass die Knoten ($106_0$...$106_{63}$) zum Umsetzen des Algorithmus durch deren zweiten globalen Nummern markiert sind.

2. Verfahren (200; 300) nach Anspruch 1, wobei die ausgewählten Knoten ($106_7$, $106_{15}$, $106_{23}$, $106_{31}$, $106_{39}$, $106_{47}$, $106_{55}$, $106_{63}$) ein gemeinsames Merkmal aufweisen, mit dem die anderen Knoten nicht versehen sind.

3. Verfahren (200; 300) nach Anspruch 2, wobei das gemeinsame Merkmal jenes ist, dass die ausgewählten Knoten ($106_7$, $106_{15}$, $106_{23}$, $106_{31}$, $106_{39}$, $106_{47}$, $106_{55}$, $106_{63}$) optische Netzwerkschnittstellen sind.

4. Verfahren (200; 300) nach Anspruch 2 oder 3, wobei das gemeinsame Merkmal jenes ist, dass die ausgewählten Knoten ($106_7$, $106_{15}$, $106_{23}$, $106_{31}$, $106_{39}$, $106_{47}$, $106_{55}$, $106_{63}$) Speichercomputern (104) angehören.

5. Verfahren (200; 300) nach Anspruch 2, wobei das gemeinsame Merkmal jenes ist, dass die ausgewählten Knoten ($106_7$, $106_{15}$, $106_{23}$, $106_{31}$, $106_{39}$, $106_{47}$, $106_{55}$, $106_{63}$) Berechnungscomputern (102) angehören, die einen Grafikprozessor beinhalten.

6. Verfahren (200) nach einem der Ansprüche 1 bis 5, wobei die zweiten globalen Nummern der ausgewählten Knoten ($106_7$, $106_{15}$, $106_{23}$, $106_{31}$, $106_{39}$, $106_{47}$, $106_{55}$, $106_{63}$) aufeinanderfolgend sind.

7. Verfahren (300) nach einem der Ansprüche 1 bis 6, weiter Folgendes beinhaltend:

- die Bestimmung (302) der Periodizität jedes von mindestens einem Teil der Kommunikations-Links (114),
- die Bestimmung (304) von Werten, die dazu bestimmt sind, nacheinander die zweiten globalen Nummern der ausgewählten Knoten ($106_7$, $106_{15}$, $106_{23}$, $106_{31}$, $106_{39}$, $106_{47}$, $106_{55}$, $106_{63}$) zu trennen, wobei sich jeder bestimmte Wert von jeder bestimmten Periodizität unterscheidet.

8. Verfahren (200; 300) nach einem der Ansprüche 1 bis 7, wobei die Knoten ($106_0$...$106_{63}$) mit Verbindungs-Ports eines Teils der Wahlschalter verbunden sind, wobei diese Verbindungs-Ports lokale Nummern innerhalb des Wahlschalters aufweisen, dem diese Verbindungs-Ports angehören, und wobei die ersten globalen Nummern aus den lokalen Nummern erhalten werden.

**9.** Verfahren (200; 300) nach Anspruch 8, wobei die ersten globalen Nummern der Knoten ($106_0...106_{63}$), die mit Verbindungs-Ports eines Wahlschalters verbunden sind, einander in der gleichen Reihenfolge wie die lokalen Nummern der Verbindungs-Ports folgen, mit denen die Knoten ($106_0...106_{63}$) jeweils verbunden sind.

**10.** Verfahren (200; 300) nach einem der Ansprüche 1 bis 9, weiter den folgenden Schritt beinhaltend:

- die Erforschung (202) des Computer-Clusters (100) zum Bestimmen seiner Topologie, wobei die Knoten ($106_0...106_{63}$) entsprechend der ersten globalen Nummerierung im Laufe dieser Erforschung nummeriert werden.

**11.** Verfahren (200; 300) nach einem der Ansprüche 1 bis 10, wobei der Computer-Cluster (100) gestaltet ist, um die ersten Phasen, im Laufe derer die nicht ausgewählten Knoten untereinander Daten austauschen, und zweite Phasen, im Laufe derer die nicht ausgewählten Knoten Daten mit ausgewählten Knoten austauschen, abzuwechseln.

**12.** Computerprogramm, das von einem Kommunikationsnetzwerk herunterladbar ist, und/oder auf einem von einem Computer lesbaren, und/oder von einem Prozessor ausführbaren Support gespeichert ist, **dadurch gekennzeichnet, dass** es Anweisungen zur Ausführung der Schritte eines Verfahrens (200; 300) zum Erzeugen von Kommunikationswegen zwischen Knoten ($106_0...106_{63}$) eines Computer-Clusters (100) nach einem der Ansprüche 1 bis 11 umfasst, wenn das Programm auf einem Computer ausgeführt wird.

**13.** Computer-Cluster (100), Folgendes beinhaltend:

- Knoten ($106_0...106_{63}$),
- ein Netzwerk (110) von Verbindungen der Knoten ($106_0...106_{63}$) untereinander, Folgendes beinhaltend:

  • Wechselschalter ($112_1...112_{14}$), mit einem Teil davon die Knoten ($106_0...106_{63}$) verbunden sind,
  • Kommunikations-Links (114) zwischen den Wechselschaltern ($112_1...112_{14}$),

wobei der Computer-Cluster (100) eine bestimmte Topologie aufweist, die die Anordnung der Knoten ($106_0...106_{63}$), der Wechselschalter ($112_1...112_{14}$) und der Kommunikations-Links (114) zueinander definiert, wobei der Computer-Cluster (100) Folgendes beinhaltet:

- Mittel zum Erhalten der Topologie des Computer-Clusters (100) mit ersten jeweils den Knoten ($106_0...106_{63}$) zugeordneten globalen Nummern,
- Mittel zum Umsetzen, für jedes Knotenpaar ($106_0...106_{63}$), eines Algorithmus, der gestaltet ist, um einen Kommunikationsweg zwischen dem ersten und zweiten Knoten des Paares aus jeweiligen Nummern dieser Knoten und der Topologie des Computer-Clusters (100) bereitzustellen, wobei der Algorithmus gestaltet ist, um durch einen selben Kommunikations-Link (114) Wege durchlaufen zu lassen, deren erste oder zweite Knoten periodische Nummern gemäß einer Periodizität größer als eins aufweisen,

**dadurch gekennzeichnet, dass** er weiter Folgendes beinhaltet:

- Mittel zur Auswahl) von Knoten ($106_7$, $106_{15}$, $106_{23}$, $106_{31}$, $106_{39}$, $106_{47}$, $106_{55}$, $106_{63}$) ,
- Mittel zur Nummerierung der Knoten ($106_0...106_{63}$), um ihnen zweite globale Nummern, die sich von den ersten globalen Nummern für mindestens einen Teil der ausgewählten Knoten ($106_7$, $106_{15}$, $106_{23}$, $106_{31}$, $106_{39}$, $106_{47}$, $106_{55}$, $106_{63}$) unterscheiden, zuzuordnen, wobei die zweiten globalen Nummern der ausgewählten Knoten ($106_7$, $106_{15}$, $106_{23}$, $106_{31}$, $106_{39}$, $106_{47}$, $106_{55}$, $106_{63}$) nacheinander von Werten getrennt sind, wobei sich jeder von der Periodizität von jedem von mindestens einem Teil der Kommunikations-Links (114) unterscheidet,
und dadurch, dass die Knoten ($106_0...106_{63}$) zur Umsetzung des Algorithmus durch deren zweiten globalen Nummern markiert sind.

## Claims

**1.** A method (200; 300) for establishing communication routes between nodes ($106_0...106_{63}$) of a computer cluster (100) comprising:

- nodes ($106_0...106_{63}$),
- an interconnection network (110) of the nodes ($106_0...106_{63}$) comprising:

  • switches ($112_1...112_{14}$) to a part of which the nodes ($106_0...106_{63}$) are connected,
  • communication links (114) between the switches ($112_1...112_{14}$),

the computer cluster (100) having a certain topology defining the relative arrangement of the nodes ($106_0...106_{63}$), switches ($112_1...112_{14}$) and communication links (114), the method (200; 300) comprising the steps of:

  - obtaining (204) the topology of the computer cluster (100), with first global numbers respectively assigned to the nodes ($106_0...106_{63}$),
  - implementing (210), for each pair of nodes ($106_0...106_{63}$), an algorithm designed for providing a communication route between the first and second nodes of the pair, based on respective numbers of these nodes and the topology of the computer cluster (100), the algorithm being designed for passing routes via the same communication link (114), the first or second nodes of which routes have periodic numbers according to a periodicity greater than one,

  **characterized in that** it further comprises:

  - selecting (206) nodes ($106_7$, $106_{15}$, $106_{23}$, $106_{31}$, $106_{39}$, $106_{47}$, $106_{55}$, $106_{63}$),
  - numbering (208) the nodes ($106_0...106_{63}$) in order to assign second global numbers thereto, which numbers are different from the first global numbers for at least one part of the selected nodes ($106_7$, $106_{15}$, $106_{23}$, $106_{31}$, $106_{39}$, $106_{47}$, $106_{55}$, $106_{63}$), the second global numbers of the selected nodes ($106_7$, $106_{15}$, $106_{23}$, $106_{31}$, $106_{39}$, $106_{47}$, $106_{55}$, $106_{63}$) being successively separated by values each of which is different from the periodicity of each of at least one part of the communication links (114),

and **in that**, in order to implement the algorithm, the nodes ($106_0...106_{63}$) are identified by the second global numbers thereof.

2. The method (200; 300) according to claim 1, wherein the selected nodes ($106_7$, $106_{15}$, $106_{23}$, $106_{31}$, $106_{39}$, $106_{47}$, $106_{55}$, $106_{63}$) have a common feature of which the other nodes are devoid.

3. The method (200; 300) according to claim 2, wherein the common feature is that the selected nodes ($106_7$, $106_{15}$, $106_{23}$, $106_{31}$, $106_{39}$, $106_{47}$, $106_{55}$, $106_{63}$) are optical network interfaces.

4. The method (200; 300) according to claim 2 or 3, wherein the common feature is that the selected nodes ($106_7$, $106_{15}$, $106_{23}$, $106_{31}$, $106_{39}$, $106_{47}$, $106_{55}$, $106_{63}$) belong to storage computers (104).

5. The method (200; 300) according to claim 2, wherein the common feature is that the selected nodes ($106_7$, $106_{15}$, $106_{23}$, $106_{31}$, $106_{39}$, $106_{47}$, $106_{55}$, $106_{63}$) belong to computer processors (102) comprising a graphics processing unit.

6. The method (200) according to any of claims 1 to 5, wherein the second global numbers of the selected nodes ($106_7$, $106_{15}$, $106_{23}$, $106_{31}$, $106_{39}$, $106_{47}$, $106_{55}$, $106_{63}$) are successive.

7. The method (300) according to any of claims 1 to 6, further comprising the steps of:

  - determining (302) the periodicity of each of at least one part of the communication links (114),
  - determining (304) values intended to successively separate the second global numbers of the selected nodes ($106_7$, $106_{15}$, $106_{23}$, $106_{31}$, $106_{39}$, $106_{47}$, $106_{55}$, $106_{63}$), whereby each determined value is different from each determined periodicity.

8. The method (200; 300) according to any of claims 1 to 7, wherein the nodes ($106_0...106_{63}$) are connected to connection ports of a part of the switches, these connection ports having local numbers within the switch to which these connection ports belong, and wherein the first global numbers are obtained from the local numbers.

9. The method (200; 300) according to claim 8, wherein the first global numbers of the nodes ($106_0...106_{63}$) connected to connection ports of a switch follow on from each other consecutively in the same order as the local numbers of the connection ports to which these nodes ($106_0...106_{63}$) are respectively connected.

**10.** The method (200; 300) according to any of claims 1 to 9, further comprising the step of:

- discovering (202) the computer cluster (100) in order to determine the topology thereof, the nodes ($106_0...106_{63}$) being numbered according to the first global numbering system during this discovery.

**11.** The method (200; 300) according to any of claims 1 to 10, wherein the computer cluster (100) is designed to alternate first phases during which the unselected nodes exchange data between one another, and second phases during which the unselected nodes exchange data with the selected nodes.

**12.** A computer program that can be downloaded from a communication network and/or saved on a computer-readable medium and/or executable by a processor, **characterized in that** it comprises instructions for carrying out the steps of a method (200; 300) for establishing communication routes between nodes ($106_0...106_{63}$) of a computer cluster (100) according to any of claims 1 to 11, when said program is executed on a computer.

**13.** A computer cluster (100) comprising:

- nodes ($106_0...106_{63}$),
- an interconnection network (110) of the nodes ($106_0...106_{63}$) comprising:

  • switches ($112_1...112_{14}$) to a part of which the nodes ($106_0...106_{63}$) are connected,
  • communication links (114) between the switches ($112_1...112_{14}$),

the computer cluster (100) having a certain topology defining the relative arrangement of the nodes ($106_0...106_{63}$), switches ($112_1...112_{14}$) and communication links (114), the computer cluster (100) comprising:

- means for obtaining the topology of the computer cluster (100), with first global numbers respectively assigned to the nodes ($106_0...106_{63}$),
- means for implementing, for each pair of nodes ($106_0...106_{63}$), an algorithm designed for providing a communication route between the first and second nodes of the pair, based on respective numbers of these nodes and the topology of the computer cluster (100), the algorithm being designed for passing routes via the same communication link (114), the first or second nodes of which routes have periodic numbers according to a periodicity greater than one,

**characterized in that** it further comprises:

- means for selecting nodes ($106_7$, $106_{15}$, $106_{23}$, $106_{31}$, $106_{39}$, $106_{47}$, $106_{55}$, $106_{63}$),
- means for numbering the nodes ($106_0...106_{63}$) in order to assign second global numbers thereto, which numbers are different from the first global numbers for at least one part of the selected nodes ($106_7$, $106_{15}$, $106_{23}$, $106_{31}$, $106_{39}$, $106_{47}$, $106_{55}$, $106_{63}$), the second global numbers of the selected nodes ($106_7$, $106_{15}$, $106_{23}$, $106_{31}$, $106_{39}$, $106_{47}$, $106_{55}$, $106_{63}$) being successively separated by values each of which is different from the periodicity of each of at least one part of the communication links (114),

and **in that**, in order to implement the algorithm, the nodes ($106_0...106_{63}$) are identified by the second global numbers thereof.

# Figure 1

## Figure 2

200

```
202
 │
 ▼
204
 │
 ▼
206
 │
 ▼
208
 │
 ▼
210
 │
 ▼
212
 │
 ▼
214
 │
 ▼
216
```

## Figure 3

300

```
202
 │
 ▼
204
 │
 ▼
206
 │
 ▼
302
 │
 ▼
304
 │
 ▼
306
 │
 ▼
210
 │
 ▼
212
 │
 ▼
214
 │
 ▼
216
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3037463